# EUROPÄISCHE PATENTSCHRIFT

(11) **EP 0 717 244 B1**
(45) Veröffentlichungstag und Bekanntmachung des Hinweises auf die Patenterteilung: **26.05.1999**
(21) Anmeldenummer: 95118329.2
(22) Anmeldetag: 22.11.1995
(51) Int. Cl.: F24J 2/32, F24J 2/05

(54) **Sonnenkollektor**
Solar collector
Collecteur solaire

(30) Priorität: 15.12.1994 DE 4444733
(43) Veröffentlichungstag der Anmeldung: 19.06.1996
(73) Patentinhaber: VIESSMANN WERKE GmbH & CO., 35107 Allendorf/Eder (DE)
(72) Erfinder: Hofbauer, Peter, Prof. Dr.-Ing., D-51503 Rösrath-Hoffnungsthal (DE); Böhle, Werner, D-35066 Frankenberg-Schreufa (DE)
(74) Vertreter: Wolf, Günter, Dipl.-Ing.

(56) Entgegenhaltungen:
- EP-A- 0 033 175
- DE-U- 9 400 958
- DE-U- 9 400 960
- US-A- 4 212 293

## Beschreibung

Die Erfindung betrifft einen Sonnenkollektor gemäß Oberbegriff des Patentanspruches 1.

Sonnenkollektoren dieser Art, bei denen also eine trockene Verbindung zwischen den das verdampfbare Fluid einerseits und das Wärmeträgermedium führenden Elementen andererseits besteht, sind bspw. durch die DE-U-94 00 960 und DE-U-94 00 961 bekannt. Diese beiden Sonnenkollektoren mit ihren einsträngigen Sammelleitungen und somit entfernt voneinander angeordneten Vor- und Rücklaufleitungen unterscheiden sich dadurch, daß im ersten Fall die an den Enden der Absorber angeschlossenen Kondensatoren (in diesem Falle Hohlzylinder) mit ihrer Umfangsfläche nur zur Hälfte in entsprechende Einprägungen der Sammelleitung eingebettet sind, während im zweiten Fall die kegelstumpfförmigen Kondensatoren in entsprechend kegelstumpfförmig abgegrenzte Hohlräume der Sammelleitung eingesetzt sind. Die zweite Version hat also gegenüber der ersten den Vorteil der im wesentlichen ganzflächigen Einbindung der Kondensatoren in den Sammelleitung.

Da in beiden Fällen die das Wärmeträgermedium führenden Sammelleitung nur einsträngig ausgebildet sind, müssen zwangsläufig die Vor- und Rücklaufanschlüsse, wie erwähnt, an beiden Enden der Sammelleitung angeordnet werden, was bei nebeneinander zusammengeschlossenen Kollektoren (dies ist die Regel) zu relativ großen Distanzen (bis bspw. 10 m) der Vor- und Rücklaufanschlüsse führen kann verbunden mit dem Erfordernis, relativ große Längen der Vor- und Rücklaufleitungen einzeln isolieren zu müssen. Der Vorteil der größeren Wärmeübergangs fläche beim Kollektor nach dem DE-U-94 00961 muß durch eine relativ aufwendige und präzise Herstellung des Sammelleitung und des Kondensators erkauft werden, wenn ein optimaler Wärmeleitkontakt zwischen Kondensator und Sammelleitung erreichbar sein soll. Die Einbringung von Wärmeleitpaste, um Mangelkontakte zu überbrücken, stellt nicht nur einen zusätzlichen Arbeitsgang dar, sondern bringt auch keine wesentliche Verbesserung des Wärmeüberganges.

Nach der EP-A-0 109 716 ist ferner ein Sonnenkollektor bekannt, der nach dem gleichen Prinzip wie die vorbeschriebenen arbeitet. Die Sammelleitung besteht hierbei jedoch aus einem je nach Anzahl der anzuschließenden Absorber entsprechend langen Gehäuse, das durch eine Trennwand in eine Vor- und eine Rücklaufkammer geteilt ist. Für die Einbindung der Kondensatoren sind in der Trennwand Hülsen angeordnet, in denen dann unter Zwischenanordnung von gut wärmeleitendem Material die Kondensatoren sitzen. Außerdem müssen in ähnlich aufwendiger Weise die Außenhülsen der Absorber abgedichtet in die Außenwandung des Gehäuses eingebunden werden.

Ausgehend von Sonnenkollektoren der eingangs genannten Art liegt der Erfindung die Aufgabe zugrunde, einen solchen Sonnenkollektor unter Beibehaltung einer weitestgehenden Umschließung der Kondensatormantelfläche dahingehend zu verbessern, daß nicht nur die Herstellung der Sammelleitung, sondern auch der Zusammenbau des Kollektors im Anschlußbereich der Kondensatoren und des Sammelleiters wesentlich und damit kostengünstiger vereinfacht ist, verbunden mit der Maßgabe, die Vor- und Rücklaufanschlüsse je nach den Installationsverhältnissen vor Ort beliebig anordnen zu können, d.h., entweder bevorzugt gemeinsam auf einer Seite, aber auch wie bisher auf beiden Seiten.

Die Aufgabe ist mit einem Sonnenkollektor der gattungsgemäßen Art nach der Erfindung durch die im Kennzeichen des Patentanspruches 1 angeführten Merkmale gelöst.

Die beiden Stränge der Sammelleitung sind hiernach formidentisch ausgebildet, so daß für deren Herstellung rationell das gleiche Formwerkzeug für eine vorteilhafte Hydro-Formverpressung genutzt werden kann. Die Zusammenfügung der zweisträngigen Sammelleitung mit der Reihe von einzubindenden Kondensatoren ist denkbar einfach, da die Kondensatoren entsprechend ausgerichtet lediglich in die Formprägungen des einen Stranges eingelegt und dann der andere Strang spiegelbildlich dagegengelegt werden muß, wonach beide Stränge mit geeigneten Mitteln zusammengespannt werden, um den ganz flächen Wärmeleitkontakt zwischen den Umfangsflächen der Kondensatoren und den beiden Strängen der Sammelleitung herzustellen.

Als geeignete Mittel dafür sind einfache Spannklemmen mit ausreichender Spannkraft bevorzugt vorgesehen, was im einzelnen noch näher erläutert wird. Besondere Halteblöcke wie beim Gegenstand gemäß DE-U-94 00 960 oder ein aufwendiger Einbau von Aufnahmehohlräumen für die Aufnahme der Kondensatoren wie beim DE-U-94 00 961 oder der EP-A-0 109 716 sind dadurch entbehrlich geworden.

Die Formprägungen der Stränge zur Anlage an die Kondensatorumfangsflächen sind dabei so bemessen, daß die zur gemeinsamen Zuordnungsebene weisenden Flächen der Stränge des Sammelleiters nicht in Kontakt stehen, d.h., einen kleinen Spalt begrenzen.

Um die beiden Stränge bequem mit den Vor- und Rücklaufanschlüssen oder miteinander verbinden (wird noch näher erläutert), oder auch Kollektoreinheiten bequem nebeneinander anschließen zu können, sind die beiden Stränge der Sammelleitung in bezug auf ihre gemeinsame Zuordnungsebene an ihren Endbereichen mit parallel zueinander und zur Zuordnungsebene ausmündenden Abkröpfungen versehen und diese in kreisförmige Querschnitte übergehend ausgebildet, was ebenfalls noch näher erläutert wird.

Da die Sammelleitung erfindungsgemäß aus zwei völlig separaten aber formidentischen Strängen gebildet ist, ergeben sich unterschiedliche Anschlußmöglichkeiten für die Verbindung der Stränge untereinander aber auch für die Anschlußmöglichkeiten der Vor- und Rücklaufanschlüsse, und damit für die Führung des Wärmemediums durch den Sammelleiter.

Der erfindungsgemäße Sonnenkollektor und weitere vorteilhafte Ausgestaltungen werden nachfolgend anhand der zeichnerischen Darstellung von Ausführungsbeispielen näher erläutert.

Es zeigt
- Fig. 1: einen Sonnenkollektor in Draufsicht;
- Fig. 2: perspektivisch die Zuordnung eines Kollektorkörpers zum wärmeisolierten Gehäuse der Sammelleitung;
- Fig. 3: teilweise im Schnitt längs Linie III-III in Fig. 1 und in Seitenansicht den Sonnenkollektor;
- Fig. 4: einen Schnitt längs Linie IV-IV in Fig. 3 durch die Sammelleitung;
- Fig. 5: einen Fig. 4 entsprechenden Teilschnitt durch eine andere Verbindungsausbildung der beiden Stränge der Sammelleitung;
- Fig. 6,7: im Schnitt und teilweise im Schnitt und Ansicht besondere Anschlußelemente;
- Fig. 8: etwas vergrößert in Seitenansicht die Darstellung im Kreis gemäß Fig. 4;
- Fig. 9: vergrößert und im Schnitt ein Spannelement für die Anschlußstelle gemäß Fig. 8;
- Fig. 10: einen Schnitt längs Linie X-X in Fig. 4 und
- Fig. 11: schematisch verschiedene Durchström- und Zuordnungsmöglichkeiten.

Der Sonnenkollektor besteht wie bisher auch schon aus mehreren, die eingestrahlte Energie aufnehmenden rohrförmigen, in sich geschlossenen Körpern 1, die ein verdampfbares Fluid enthalten und deren als Kondensator 2 ausgebildetes eines Ende wärmeleitend mit einer ein Wärmeträgermedium vom Rücklauf- zum Vorlaufanschluß 3, 4 im Durchlauf führenden, wärmeisolierten Sammelleitung 5 in Kontaktverbindung stehen. Was dabei die Körper 1 betrifft, so sind diese aus einem transparenten Rohr R und dem mindestens einseitig geschwärzten eigentlichen Wärmeabsorber A gebildet. Das die Sammelleitung 5 und die Kondensatoren 2 umschließende, wärmeisolierte Gehäuse ist mit G bezeichnet.

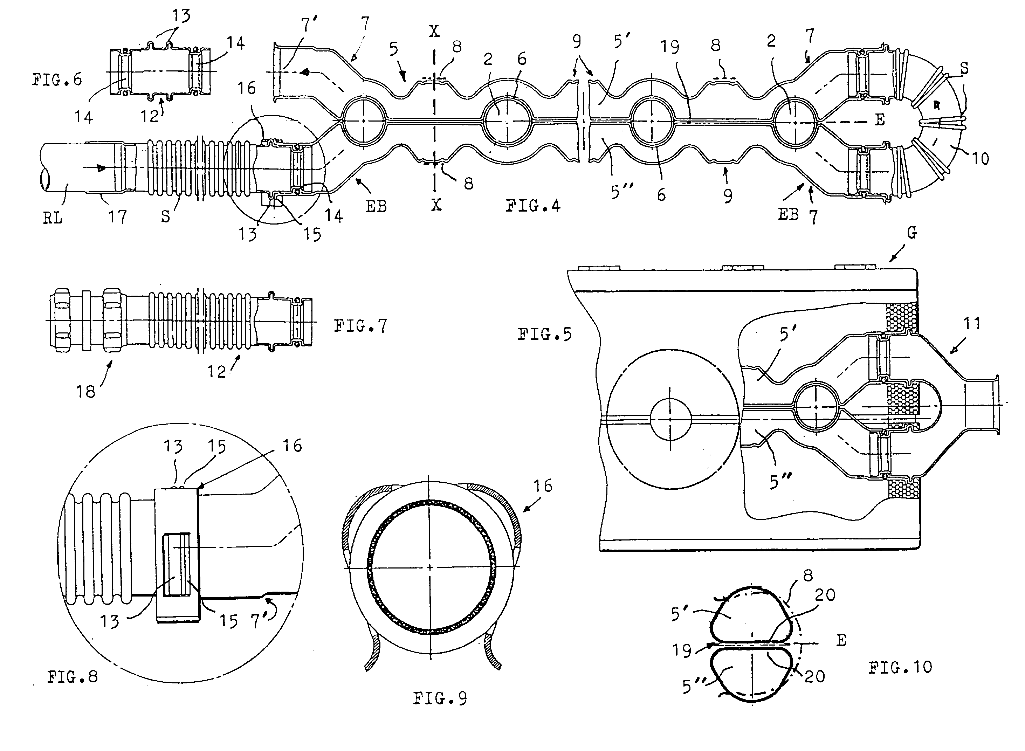

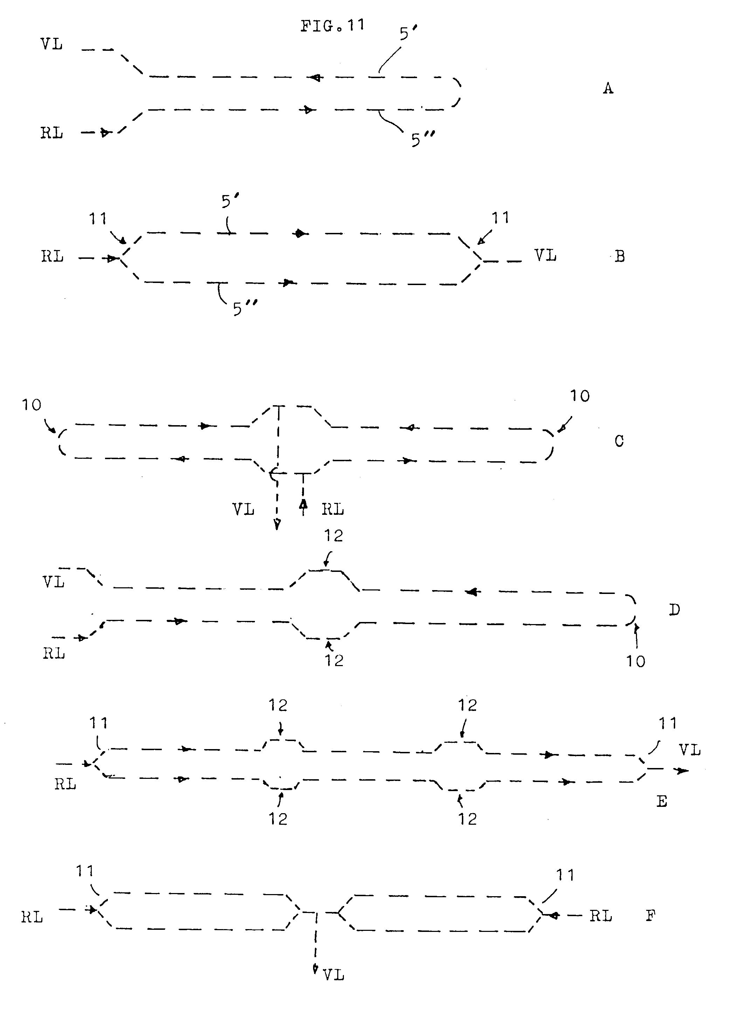

Unter Verweis auf insbesondere Fig. 4 ist die Sammelleitung 5 aus zwei separaten Strängen 5', 5" gebildet, und die Kondensatoren 2 sind zwischen den Strängen 5', 5" der Sammelleitung 5 eingebunden, und zwar in mit der äußeren Formgebung der Kondensatoren 2 angepaßten Formprägungen 6. Die beiden Stränge 5', 5" der Sammelleitung 5 sind formidentisch und hydro-formverpreßt ausgebildet und ferner sind sie mit Klemmen 8 gegeneinander und gegen die Kondensatoren 2 verspannt (siehe Fig. 10). Für letztere sind die beiden Stränge 5', 5" im Anordnungsbereich der Klemmen 8 mit Aufnahmeeintiefungen 9 für die Klemmen 8 versehen, die jeweils beidseitig neben den Anordnungsbereichen den Kondensatoren 2 angeordnet sind, um einen guten Wärmeleitkontakt herzustellen.

Die Formprägungen 6 für die Aufnahme der Kondensatoren 2 weisen Abmessungen derart auf, daß zwischen beiden Strängen 5', 5" nach dem Zusammenfügen ein Spalt 19 (siehe Fig. 4 und 10) vorliegt, was Gewähr dafür gibt, daß die Formprägungen 6 dicht an den Kondensatoren 2 anliegen.

Aus den genannten Gründen weisen diese beiden Stränge 5', 5" vorteilhaft eine Gestaltung derart auf, daß diese in bezug auf ihre gemeinsame Zuordnungsebene E an ihren Endbereichen EB mit parallel zueinander und zur Zuordnungsebene E ausmündenden Abkröpfungen 7 versehen und diese in kreisförmige Querschnitte übergehend ausgebildet sind.

In den Fig. 4 und 5 sind außerdem unterschiedliche Verbindungsausführungsformen der beiden Stränge 5'. 5" dargestellt.

In Fig. 4 liegt eine Reihenschaltung der beiden Stränge 5', 5" vor, die auf der anschlußfernen Seite mit einem Krümmer 10 verbunden sind, der zweckmäßig und wie dargestellt mit Dehnungssicken S versehen ist. Anders dagegen die Ausführungsform nach Fig. 5, bei der die beiden Stränge 5', 5" in bezug auf ihre Vor- und Rücklaufanschlüsse 4, 3 parallel geschaltet angeordnet und an beiden Enden mit formidentischen Hosenanschlußstutzen 11 versehen sind. Wie ersichtlich, sind auch bei unterschiedlichen Verbindungen die Stränge 5', 5" formidentisch. Bei der Ausführungsform nach Fig. 4 liegen die Vor- und Rücklaufanschlüsse 4, 3 auf der gleichen Seite, während sich bei der nach Fig. 5 die Anschlüsse auf verschiedenen Seiten befinden. Der in Fig. 5 dargestellte Hosenanschlußstutzen 11 kann also Rück- oder Vorlaufanschluß 3, 4 sein.

Desweiteren sind in Fig. 4 und den Fig. 6, 7 zum Kollektor gehörende Anschlußelemente zu verschiedenen Ausführungsformen dargestellt.

Gemäß Fig. 4 sind in den im Querschnitt kreisförmigen Abkröpfungsenden 7'der Stränge 5', 5" Anschlußrohrstücke 12 angeordnet, die mit einer nach außen weisenden Haltesicke 13 und einer nach innen weisenden Dichtungsaufnahmesicke 14 versehen, wobei die Haltesicke 13 gegen einen Bördelrand 15 am Abkröpfungsende 7' des jeweiligen Stranges 5', 5" mittels einer Spannschelle 16 verspannt ist.

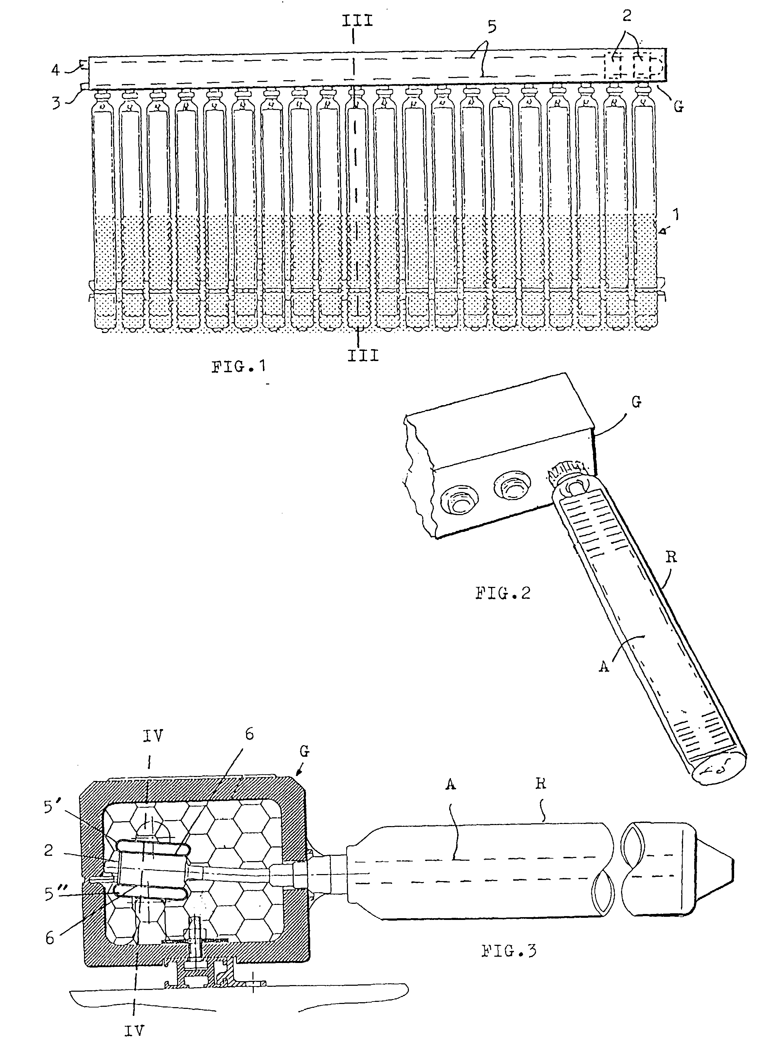

Bei diesem Ausführungsbeispiel ist dann das Anschlußrohrstück 12, das über einen gewissen Teil seiner Länge Biege- und Dehnungssicken S aufweist, mit einem Einlötende 17 versehen, um darin die Rücklaufleitung RL einlöten zu können. Wie in Fig. 7 verdeutlicht, kann aber auch das Anschlußrohrstück 12 bei gleicher Gestaltung der Kollektoranschlußseite auch mit einer Klemmringverschraubung 18 ausgestattet werden. Im übrigen sind auch die Einsteckenden des Krümmers 10 und des Hosenanschlußstutzens 11 in gleicher Weise ausgebildet und dimensioniert und auch das Anschlußrohrstück 12 gemäß Fig. 6, das an beiden Enden gleich ausgebildet ist und das als Verbindungselement dient, wenn nebeneinander mehrere Einzelkollektoren gemäß Fig. 1 miteinander verbunden werden sollen.

Die in Fig. 4, 8 und 9 dargestellten Spannschellen 16 können aufgrund der durchgehend gleichen Anschlußgestaltungen auch zur Fixierung des Krümmers 10 und des Hosenanschlußstutzens 11 verwendet werden, was nicht besonders dargestellt ist.

Hinsichtlich der Durchströmbarkeit der beiden Stränge 5', 5" sind also aufgrund dieser Ausgestaltungen verschiedene Varianten bei einfacher Zusammenfügbarkeit möglich. So können der in Fig. 4 dargestellten zweisträngigen Sammelleitung auf der linken Anschlußseite unter Verwendung der Anschlußrohrstücke nach Fig. 6 ein oder mehrere weitere Einzelkollektoren gemäß Fig. 1 vorgeschaltet werden, wobei der Kollektor ganz links außen wieder die Anschlußrohrstücke 12 gemäß Fig. 4 bzw. Fig. 7 aufweist und der ganz rechts außen, wie dargestellt, den Krümmer 10. Die beiden Stränge 5', 5" werden hierbei im Gegenstrom durchströmt.

Anders bei der Ausführungsform nach Fig. 5, bei der ebenfalls mehrere Kollektoren gemäß Fig. 1 nebeneinander mit Hilfe der Anschlußrohrstücke 12 gemäß Fig. 6 angeordnet und verbunden werden können, wobei ganz links und ganz rechts die Hosenanschlußstutzen 11 an- bzw. eingesetzt werden. Hierbei werden die beiden Stränge 5'. 5" vom Rücklauf zum Vorlauf hin parallel durchströmt.

Im Rahmen der Anordnung einer ganzen Kollektorbatterie ist es aber auch aufgrund der Gesamtgeometrie möglich, Einzelkollektoren mit ihren Vor- und Rücklaufanschlüssen gegeneinander gerichtet in einem Gesamtkollektor anzuordnen, wie dies in Fig. 11 C verdeutlicht ist, deren Schaltung bei Zusammenschaltung mehrerer Einzelkollektoren bevorzugt wird, da hierbei im Vergleich zu Fig. 11 D die Wege der Vor- und Rückläufe nur halb so lang sind und die Vor- und Rücklaufleitung in der Mitte gemeisam abgehend angeordnet werden können.

## Patentansprüche

1. Sonnenkollektor, bestehend aus mehreren, die eingestrahlte Energie aufnehmenden rohrförmigen, in sich geschlossenen Körpern (1), die ein verdampfbares Fluid enthalten und deren als Kondensator (2) ausgebildetes eines Ende wärmeleitend mit einer ein Wärmeträgermedium vom Rücklauf- zum Vorlaufanschluß (3, 4) im Durchlauf führenden, wärmeisolierten Sammelleitung (5) in Kontaktverbindung stehen,
**dadurch gekennzeichnet,**
daß die Sammelleitung (5) aus zwei separaten, formidentischen und hydro-formverpreßten Strängen (5', 5'') gebildet ist und die Kondensatoren (2) zwischen den Leitungssträngen (5', 5'') eingebunden sind, die zu den Kondensatoren (2) hin mit der äußeren Formgebung der Kondensatoren (2) angepaßten Formprägungen (6) versehen und mit Klemmen (8) gegeneinander und gegen die Kondensatoren (2) verspannt sind, wobei die Klemmen (8) jeweils beidseitig neben den Anordnungsbereichen der Kondensatoren (2) angeordnet sind.

2. Sonnenkollektor nach Anspruch 1,
**dadurch gekennzeichnet,**
daß die beiden Stränge (5', 5'') der Sammelleitung (5) in bezug auf ihre gemeinsame Zuordnungsebene (E) an ihren Endbereichen (EB) mit parallel zueinander und zur Zuordnungsebene (E) ausmündenden Abkröpfungen (7) versehen und diese in kreisförmige Querschnitte übergehend ausgebildet sind.

3. Sonnenkollektor nach Anspruch 1 oder 2,
**dadurch gekennzeichnet,**
daß die beiden Stränge (5', 5'') im Anordnungsbereich der Klemmen (8) mit Aufnahmeeintiefungen (9) für die Klemmen (8) versehen sind.

4. Sonnenkollektor nach einem der Ansprüche 1 bis 3,
**dadurch gekennzeichnet,**
daß die beiden Stränge (5', 5'') in bezug auf ihre Vor- und Rücklaufanschlüsse (4, 3) in Reihe geschaltet angeordnet und auf der anschlußfernen Seite mit einem Krümmer (10) verbunden sind.

5. Sonnenkollektor nach einem der Ansprüche 1 bis 3,
**dadurch gekennzeichnet,**
daß die beiden Stränge (5', 5'') in bezug auf ihre Vor- und Rücklaufanschlüsse (4, 3) parallel geschaltet angeordnet und an beiden Enden mit formidentischen Hosenanschlußstutzen (11) versehen sind.

6. Sonnenkollektor nach einem der Ansprüche 1 bis 5,
**dadurch gekennzeichnet,**
daß in den im Querschnitt kreisförmigen Abkröpfungsenden (7') der Stränge (5', 5'') Anschlußrohrstücke (12) angeordnet und diese mit einer nach außen weisenden Haltesicke (13) und einer nach innen weisenden Dichtungsaufnahmesicke (14) versehen sind, wobei die Haltesicke (13) gegen einen Bördelrand (15) am Abkröpfungsende (7') des jeweiligen Stranges (5', 5'') mittels einer Spannschelle (16) verspannt ist.

7. Sonnenkollektor nach Anspruch 6,
**dadurch gekennzeichnet,**
daß das andere Ende des Anschlußrohrstückes (12) in gleicher Weise ausgebildet ist wie das in das Abkröpfungsende (7) bis zur Sicke (13) einsteckbare Ende des Anschlußrohrstückes (12).

8. Sonnenkollektor nach Anspruch 6,
**dadurch gekennzeichnet,**
daß das andere Ende des Anschlußrohrstückes (12) als Einlötende (17) ausgebildet oder mit einer Klemmringverschraubung (18) versehen ist.

9. Sonnenkollektor nach einem der Ansprüche 4 bis 8
**dadurch gekennzeichnet,**
daß der Krümmer (10) und der Hosenanschlußstutzen (11) anschlußseitig zu den Strängen (5', 5'') in gleicher Weise ausgebildet sind wie das Anschlußrohrstück (12).

10. Sonnenkollektor nach einem der Ansprüche 1 bis 9,
**dadurch gekennzeichnet**,
daß die Stränge (5', 5") außerhalb der Anordnungsstellen der Kondensatoren (2) mit ihren zur Zuordnungsebene (E) parallelen Flächen (20) einen Spalt (19) begrenzen.

## Claims

1. A solar collector comprising a plurality of tubular inherently closed elements (1) receiving the irradiated energy and containing a vaporizable fluid, with the one end thereof configured as a capacitor (2) being in heat-conductive contact with a heat-insulated manifold (5), with a heat-carrying medium flowing therethrough from the return- to the forward-flow connection (3,4),
characterized in that the manifold (5) is formed of two separate, identically shaped and hydro-compression-molded cords (5,5"), and that the capacitors (2) are integrated between the conduit cords (5', 5") which, toward the capacitors (2), are provided with molded recesses (6) conforming to the outer shaping of the capacitors (2) and are clamped by clips (8) to one another and to the capacitors (2), with the clips (8) being respectively arranged on both sides next to the mounting areas of the capacitors (2).

2. A solar collector according to claim 1,
characterized in that the two cords (5', 5") of the manifold (5) relative to the common plane of association (E), in the end areas (EB) thereof, are provided with bendings (7) terminating in parallel with respect to one another and to the plane of association (E). and that the latter are configured so as to exhibit circular cross-sections.

3. A solar collector according to claims 1 or 2,
characterized in that the two cords (5', 5"), in the mounting area of the clips (8), are provided with recesses (9) for accommodating the clips (8).

4. A solar collector according to claims 1 through 3,
characterized in that the two cords (5', 5"), relative to their forward- and return-flow connections (4,3) are arranged in series connection, and on the side facing away from the connection, are connected to elbow (10).

5. A solar collector according to any one of claims 2 through 3,
characterized in that the two cords (5', 5") relative to the forward- and return-flow connections (4,3) are connected in parallel and, on both ends, are provided with identically formed breeches connecting nozzles (11).

6. A solar collector according to any one of claims 1 through 5,
characterized in that arranged in the circular cross-sectional bending ends (7') of the cords (5',5") are connection pipings (12) provided with an externally facing holding bead (13) and an internally facing sealant-receiving bead (14), with the holding bead (13) being clamped by means of a clamping claw (16) to a flanged edge (15) on the bending end (7') of the respective cord (5', 5").

7. A solar collector according to claim 6,
characterized in that the other end of the connection piping (12) is of a form identical with that of the end of the connection piping (12) plugged into the bending end (7) down to the bead (13).

8. A solar collector according to claim 6,
characterized in that the other end of the connection piping (12) is in the form of a soldered end (17) or is provided with a clamping ring screw (18).

9. A solar collector according to any one of claims 4 through 8,
characterized in that the elbow (10) and the breeches connecting nozzle (11) on the side of connection to the cords (5', 5") are of a design identical with that of the connection piping (12).

10. A solar collector according to any one of claims 1 through 9,
characterized in that the cords (5', 5") externally of the mounting points of the capacitors (2) confine a gap (19) with their faces (20) extending in parallel to the plane of association (E).

## Revendications

1. Collecteur solaire, constitué par plusieurs corps (1) fermés en soi, en forme de tuyau, captant l'énergie incidente, qui contiennent un fluide évaporable et dont l'une des extrémités, configurée comme condensateur (2), est en relation de contact thermoconducteur avec une conduite collectrice (5) isolée thermiquement, qui conduit en continu un agent caloporteur du raccord retour au raccord aller (3, 4),
caractérisé en ce
que la conduite collectrice (5) est formée par deux brins (5', 5") séparés, de forme identique et moulés par hydro-injection, et les condensateurs (2) sont intégrés entre les brins de conduite (5', 5") qui sont pourvus vers les condensateurs (2) d'empreintes de moulage (6) adaptées à la configuration extérieure des condensateurs (2) et qui sont serrés avec des pinces (8) les uns contre les autres et contre les condensateurs (2), les pinces (8) étant placées respectivement des deux côtés à côté des zones de disposition des condensateurs (2).

2. Collecteur solaire selon la revendication 1,
caractérisé en ce
que les deux brins (5', 5") de la conduite collectrice (5) sont pourvus, dans leurs zones d'extrémité (EB), par rapport à leur plan de correspondance commun (E) de coudures (7) qui débouchent parallèlement l'une à l'autre et au plan de correspondance (E) et que celles-ci sont configurées en se poursuivant en sections circulaires.

3. Collecteur solaire selon la revendication 1 ou 2,
caractérisé en ce
que les deux brins (5', 5") sont pourvus, dans la zone de disposition des pinces (8), de renfoncements de logement (9) pour les pinces (8).

4. Collecteur solaire selon l'une des revendications 1 à 3,
caractérisé en ce
que les deux brins (5', 5") sont placés montés en série par rapport à leurs raccords aller et retour (4, 3) et sont reliés à un raccord coudé (10) sur le côté éloigné du raccord.

5. Collecteur solaire selon l'une des revendications 1 à 3,
caractérisé en ce
que les deux brins (5', 5") sont placés montés en parallèle par rapport à leurs raccords aller et retour (4, 3) et sont pourvus, aux deux extrémités, de tubulures de raccord bifurqué (11) de forme identique.

6. Collecteur solaire selon l'une des revendications 1 à 5,
caractérisé en ce
que des pièces de tuyau de raccord (12) sont placées dans les extrémités de coudure (7') de section circulaire et que ces pièces de tuyau de raccord sont pourvues d'une moulure de maintien (13) orientée vers l'extérieur et d'une moulure de logement d'étanchéité orientée vers l'intérieur, la moulure de maintien (13) étant serré contre un bord rabattu (15) à l'extrémité de la coudure (7') du brin respectif (5', 5") au moyen d'un collier de serrage (16).

7. Collecteur solaire selon la revendication 6,
caractérisé en ce
que l'autre extrémité de la pièce de tuyau de raccord (12) est configurée de la même manière que l'extrémité de la pièce de tuyau de raccord emboîtable dans l'extrémité de la coudure (7) jusqu'à la moulure (13).

8. Collecteur solaire selon la revendication 6,
caractérisé en ce
que l'autre extrémité de la pièce de tuyau de raccord (12) est configurée comme extrémité à braser (17) ou est pourvue d'un vissage d'anneau de serrage (18).

9. Collecteur solaire selon l'une des revendications 4 à 8,
caractérisé en ce
que le raccord coudé (10) et la tubulure de raccord bifurqué (11) sont configurés du côté du raccord aux brins (5', 5") de la même manière que la pièce de tuyau de raccord (12).

10. Collecteur solaire selon l'une des revendications 1 à 9,
caractérisé en ce
que les brins (5', 5") délimitent une fente (19) à l'extérieur des endroits de disposition des condensateurs (2) avec leurs surfaces (20) parallèles au plan de correspondance (E).
